# EUROPÄISCHE PATENTANMELDUNG

(11) **EP 1 205 226 A1**
(43) Veröffentlichungstag der Anmeldung: **15.05.2002**
(21) Anmeldenummer: 01122408.6
(22) Anmeldetag: 20.09.2001
(51) Int. Cl.: B01D 29/11, B01D 29/52, B01D 29/66

(54) **Vorrichtung zur Filtrierung von Verunreinigungen enthaltenden Flüssigkeiten**

(30) Priorität: 07.11.2000 DE 10055212; 21.07.2001 DE 10135741
(71) Anmelder: KNOLL MASCHINENBAU GMBH, 88348 Bad Saulgau (DE)
(72) Erfinder: Laub, Wolfgang, 79224 Umkirch (DE)
(74) Vertreter: Patentanwälte Eisele, Otten & Roth

(57) **Zusammenfassung**

Es wird eine Vorrichtung zur Filtrierung von Verunreinigungen enthaltenden Flüssigkeiten mit mehreren, in einem Filtergehäuse (6) angeordneten Filterelementen (4), insbesondere hohlzylinderförmigen Spaltfilterkerzen (4), einem ersten Raum (1) mit zu filtrierender Flüssigkeit sowie einem zweiten Raum (2) mit filtrierter Flüssigkeit, wobei zur Rückspülung der Filterelemente (4) ein Gas im zweiten Raum (2) mit Druck beaufschlagbar ist, vorgeschlagen, mit der das Volumen des zweiten Raumes (2) und der Materialaufwand verringert werden können. Dies wird erfindungsgemäß dadurch erreicht, dass der zweite Raum (2) im Wesentlichen innerhalb des ersten Raumes (1) angeordnet ist.

## Beschreibung

Die Erfindung betrifft eine Vorrichtung zur Filtrierung von Verunreinigungen enthaltenden Flüssigkeiten nach dem Oberbegriff des Anspruchs 1.

Seit vielen Jahren sind zur Filtration von Flüssigkeiten, insbesondere von verunreinigten Kühlschmiermitteln, aufzuarbeitenden Getränken oder dergleichen, Filteranordnungen mit Filterkerzen gebräuchlich.
Entsprechende Filteranordnungen umfassen eine Öffnungen aufweisende Lochplatte, die zwischen einem Reinraum und einem Schmutzraum angeordnet ist. In den Öffnungen werden Filterkerzen, insbesondere Kantenspaltfilterkerzen, fixiert. Damit die zu reinigende Flüssigkeit vom Schmutzraum in den Reinraum gelangen kann, muss sie die Filterkerzen durchströmen, wobei Verunreinigungen der Flüssigkeit auf der Außenseite der Filterkerzen zurückgehalten werden und die Flüssigkeit mittels der Sammelleitung in den Reinraum abgeleitet werden.

Für die Reinigung der Filterkerzen wird der Filtervorgang im Allgemeinen unterbrochen und die Zu- und Abflüsse zu den Filterkerzen abgeriegelt. Anschließend wird der Reinraum mit Druckluft beaufschlagt, so dass die Druckluft radial von Innen nach Außen die Filterkerzen durchströmt und somit die auf der Außenseite des Filterkörpers abgesetzten Partikel entfernt, dieser Vorgang wird als sogenanntes "Rückspülen" des Filters bezeichnet. Nach Beendigung des Reinigungsvorganges haben die Filterkerzen wieder ihre volle Funktionsfähigkeit erreicht und der Filtriervorgang kann wieder aufgenommen werden.

Bei vielfältigsten Anwendungen dieser Filtervorrichtungen werden zahlreiche Filterkerzen in einem druckdichten Gehäuse angeordnet. Hierdurch wird eine relativ große Filterfläche auf kleinem Raum realisiert, so dass ein zufriedenstellender Stofffluss während der Filtrierung erreicht werden kann. Gebräuchlich können beispielsweise Vorrichtungen mit ca. 150 Filterkerzen sein, so dass ein vergleichsweise großer Druckbehälter vorgesehen werden muss. Hierdurch wird eine vergleichsweise große Lochplatte zur Fixierung der Filterkerzen notwendig. Dies hat zur Folge, dass der darüber befindliche Reinraum, der während der Rückspülung der Filterelemente mittels Druckluft mit Druck beaufschlagt wird, bisher vergleichsweise groß auszuführen ist, da dieser aus drucktechnischen Gründen eine glocken- bzw. kugelähnliche Form aufweisen muss.

Ein entsprechend groß dimensionierter Reinraum weist jedoch eine nachteilige Energiespeicherung während der Rückspülung der Filterelemente mittels Druckluft auf, so dass dieser hohen drucktechnischen Anforderungen standhalten muss. Beispielsweise schreibt die Druckbehälterverordnung vor, dass derzeit Behälter mit mehr als 50 bar x Liter als Druckbehälter auszuführen sind. Dies trifft bei Filtervorrichtungen gemäß dem Stand der Technik derzeit zu, so dass aufwendige und wirtschaftlich nachteilige Filtergehäuse realisiert werden müssen.

Auch ist aufgrund des großen Reinraumvolumens bei Filtervorrichtungen gemäß dem Stand der Technik ein großes Rückspülvolumen gegeben, was zu einer ungünstigen Betriebesweise, insbesondere des Reinigungsprozesses, führt.

Einer Verringerung des Reinraumvolumens steht bei Filteranordnungen gemäß dem Stand der Technik jedoch der Umstand entgegen, dass das Reinraumvolumen als Druckbehälter ausgeführt werden muss.

Aufgabe der Erfindung ist es demgegenüber, eine Vorrichtung zur Filtrierung von Verunreinigungen enthaltenden Flüssigkeiten vorzuschlagen, mit der das Volumen des Reinraumes und der Materialaufwand verringert werden können.

Diese Aufgabe wird ausgehend von einer Filtriervorrichtung der einleitend genannten Art durch die kennzeichnenden Merkmale des Anspruchs 1 gelöst. Durch die in den Unteransprüchen genannten Maßnahmen sind vorteilhafte Ausführungen und Weiterbildungen der Erfindung möglich.

Dementsprechend zeichnet sich eine erfindungsgemäße Vorrichtung dadurch aus, dass der zweite Raum im Wesentlichen innerhalb des ersten Raumes angeordnet ist.

Mittels der erfindungsgemäßen Anordnung des zweiten Raumes innerhalb des ersten Raumes wird in vorteilhafter Weise erreicht, dass während der Filtrierphase der zweite Raum von der verunreinigten, druckbeaufschlagten Flüssigkeit nahezu vollständig umspült wird, so dass die Wandung des zweiten Raumes lediglich den Differenzdruck zwischen dem Druck der verunreinigten Flüssigkeit im ersten Raum und dem Druck der gereinigten Flüssigkeit im zweiten Raum auszugleichen braucht. Demgegenüber muss beim Stand der Technik die Wandung des zweiten Raumes den Differenzdruck zwischen dem Druck der gereinigten Flüssigkeit im zweiten Raum und dem Umgebungsdruck ausgleichen, was bei akzeptabler Wandstärke zu der bekannten großvolumigen glocken- bzw. kugelförmigen Ausgestaltung des zweiten Raumes führt.

Insbesondere aufgrund des Druckausgleiches während der Filtrierphase ist ein zweiter Raum mit einem erheblich verringerten Volumen und einer akzeptablen, vergleichsweise dünnen Wandung realisierbar. Dies führt insbesondere zur Möglichkeit einer freien Formgebung des zweiten Raumes als auch des ersten Raumes.

Erfindungsgemäß wird auch ein wesentlich verringertes Rückspülvolumen, ein vergleichsweise hoher Rückspüldruck sowie ein vergleichsweise kleines Volumen des zweiten Raumes realisierbar, das insbesondere auch während des Rückspülvorganges mittels Druckluft keine nennenswerte Energiespeicherung ermöglicht. Hierdurch reduzieren sich vor allem auch die sicherheitstechnischen Anforderungen an eine erfindungsgemäße Vorrichtung, was zu einer vorteilhaften wirtschaftlichen Fertigung sowie Betriebsweise führen kann.

In einer besonderen Ausführungsform der Erfindung durchsetzt eine druckfeste Anschlussleitung des zweiten Raumes die Wandung des ersten Raumes. Hierdurch wird gewährleistet, dass eine vorteilhafte Realisierung der erfindungsgemäßen Anordnung des zweiten Raumes vollständig innerhalb des ersten Raumes vorgesehen werden kann. Mittels der druckfesten Anschlussleitung kann sowohl die filtrierte, gereinigte Flüssigkeit abgeführt als auch das zur Rückspülung der Filterelemente vorgesehene Medium, insbesondere Druckluft, dem zweiten Raum zugeführt werden.

Darüber hinaus ist mittels der druckfesten Anschlussleitung eine nahezu vollständig freie Formgebung des zweiten Raumes realisierbar. Vorzugsweise werden jedoch die Filterelemente auf einer ebenen Lochplatte angeordnet, wobei der zweite Raum beispielsweise die Form eines Pyramiden- oder Kegelstumpfes, eines Quaders bzw. Würfels, eines Kugelabschnitts oder dergleichen aufweist.

In vorteilhafter Weise ist der zweite Raum scheibenförmig ausgebildet, so dass beispielsweise die Lochplatte mit den daran angeordneten Filterkerzen an einem an der druckfesten Anschlussleitung angeordneten, ebenen Flansch gegebenenfalls mit einem ringförmigen Dichtelement angeordnet werden kann. Hierdurch ist eine besonders vorteilhafte Fertigung sowie Montage des zweiten Behälters realisierbar, was wiederum die Kosten einer erfindungsgemäßen Vorrichtung zusätzlich verringert. Zur Fixierung der Lochplatte sowie des Dichtelements kann beispielsweise eine Schraubverbindung oder dergleichen vorgesehen werden.

Ein Ausführungsbeispiel der Erfindung ist in der Zeichnung dargestellt und wird anhand der Figuren nachfolgend näher erläutert.

### Im Einzelnen zeigen

- Fig. 1: in schematischer Darstellung eine Filtriervorrichtung gemäß dem Stand der Technik und
- Fig. 2: in schematischer Darstellung eine erfindungsgemäße Filtriervorrichtung.

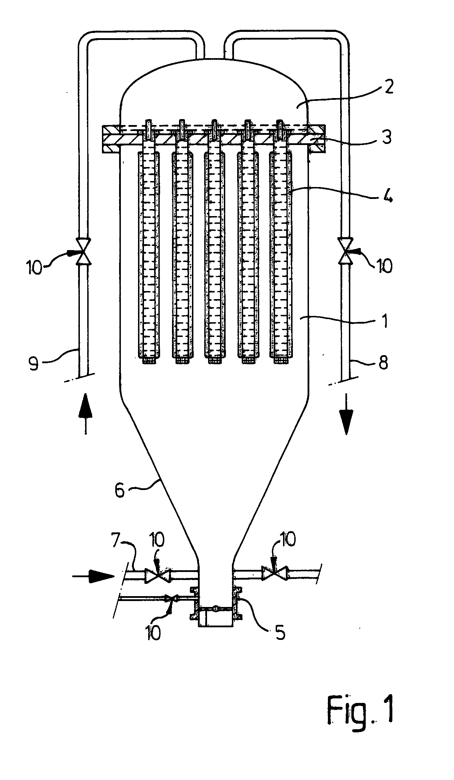

In Figur 1 ist eine Filtriervorrichtung gemäß dem Stand der Technik dargestellt, wobei in einem Filtergehäuse 6 ein Schmutzraum 1, in dem sich während des Filtriervorganges eine verschmutzte, zu filtrierende Flüssigkeit befindet, sowie ein Reinraum 2, in dem sich während des Filtriervorganges die filtrierte, gereinigte Flüssigkeit befindet, angeordnet ist. Wie in Figur 1 dargestellt, wird der Schmutzraum 1 vom Reinraum 2 durch eine Lochplatte 3 sowie zahlreichen, schematisch dargestellten Filterkerzen 4 getrennt.

Während des Filtriervorganges wird mittels einer Zufuhrleitung 7 druckbeaufschlagte, zu filtrierende Flüssigkeit, beispielsweise verunreinigtes Kühlschmiermittel, in den Schmutzraum 1 eingebracht. Das Kühlschmiermittel kann hierbei beispielsweise mit 3 bar druckbeaufschlagt durch die Filterkerzen 4 in den Reinraum 2 gedrückt werden. Hierbei lagern sich die Verunreinigungen der Flüssigkeit auf der Außenseite der Filterkerzen 4 ab, wodurch sich im Laufe der Zeit ein Filterkuchen auf den Filterkerzen 4 bildet. Der Filterkuchen auf den Filterkerzen 4 führt beispielsweise zu einer messbaren Erhöhung des Differenzdrucks zwischen dem Schmutzraum 1 und dem Reinraum 2, der gegebenenfalls mittels einer nicht dargestellten Messanordnung detektiert werden kann und bei Überschreiten eines vorgegebenen Grenzwertes zur Einleitung der Filterregenerierung herangezogen werden kann.

Während des Filtriervorganges wird über eine Abströmleitung 8 gereinigte Flüssigkeit zur weiteren bzw. Wiederverwendung abgeführt.

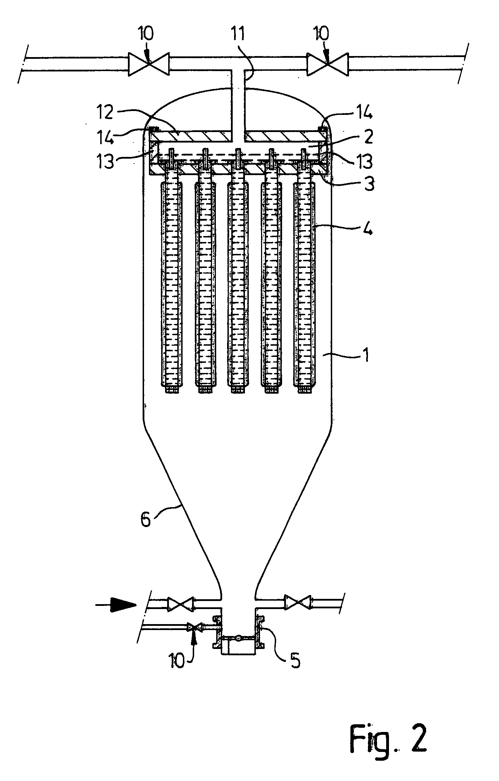

Zur Rückspülung der Filterkerzen 4 wird mittels entsprechend umgeschalteter Ventile 10 und einer Druckluftleitung 9 Druckluft in den Reinraum 2 zugeführt, so dass die Druckluft die Filterkerzen 4 von Innen nach Außen durchströmt, was zur Entfernung des abgelagerten Filterkuchens führt. Bei der in der Figur 1 und 2 dargestellten Ausführungsform fällt, insbesondere aufgrund der im Allgemeinen zuvor durchgeführten Entleerung des Schmutzraumes 1, nunmehr der Filterkuchen nach unten, so dass die Filterrückstände mittels eines Stutzens 5 abgeleitet werden können. Anschließend werden die Ventile 10 derart geschaltet, dass der Filtervorgang wieder eingeleitet werden kann.

Die erfindungsgemäße Vorrichtung gemäß der Figur 2 weist im Gegensatz zur Vorrichtung gemäß der Figur 1 einen vergleichsweise kleinen Reinraum 2 auf. Dieser ist im Wesentlichen innerhalb des Schmutzraumes 1 angeordnet, wobei lediglich eine druckfeste Anschlussleitung 11 die Wandung des Schmutzraumes 1 durchsetzt.

Figur 2 verdeutlicht den vergleichsweise kleinen Reinraum 2, der insbesondere während der Filtrierphase nahezu vollständig von der zu filtrierenden Kühlschmierflüssigkeit umströmt wird. Hierdurch kann ein Flansch 12, der die "Rückwand" des Reinraumes 2 darstellt, als Scheibe bzw. Zylinder ausgebildet werden, da dieser lediglich die Druckdifferenz zwischen dem Schmutzraum 1 und dem Reinraum 2 ausgleichen muss. Gemäß der in Figur 2 dargestellten Vorrichtung ist die Lochplatte 3 lediglich mittels eines Dichtringes 13 und schematisch dargestellten Fixierelementen 14 an den Flansch fixiert. Die Fixierelemente werden vorzugsweise als Schraubverbindungen umgesetzt und über den gesamten Randbereich des Flansches 12 bzw. der Lochplatte 3 verteilt. Jedoch sind hierfür auch sonstige, allgemein gebräuchliche Fixierelemente, einschließlich Schweiß- oder Klebeverbindungen, denkbar.

Darüber hinaus können alternativ oder in Kombination zur Fixierung im Randbereich des Flansches 12 bzw. der Laufplatte 3 auch in nicht näher dargestellter Weise entsprechende Fixierelemente nahezu über die gesamte Fläche des Flansches 12 bzw. der Lochplatte 3 verteilt werden. Hierdurch wird die Anordnung zusätzlich versteift, so dass gegebenenfalls die Wandstärke der beiden Elemente 3 und/oder 12 vergleichsweise dünn ausgebildet werden kann.

Die Darstellung gemäß der Figur 2 verdeutlicht in eindrucksvoller Weise, dass erfindungsgemäß ein wesentlich geringeres Rückspülvolumen aufgrund des deutlich verringerten Reinraumvolumens realisierbar ist. Erfindungsgemäß kann beispielsweise bei Verwendung von ca. 150 Filterkerzen 4, die an der Lochplatte 3 angeordnet sind, lediglich ein Reinraumvolumen von wenigen Litern erreicht werden. Hierdurch muss die erfindungsgemäße Vorrichtung keinen hohen sicherheitstechnischen Anforderungen gerecht werden, wodurch diese nicht als Druckbehälter gemäß der derzeitig geltenden Druckbehälterverordnung realisiert werden muss, obwohl der Rückspüldruck wesentlich höher sein kann als dies mittels Filtriervorrichtungen gemäß dem derzeitigen Stand der Technik möglich ist. Hierdurch wird wiederum eine besonders wirkungsvolle Reinigung der verschmutzten Filterkerzen 4 realisierbar.

Grundsätzlich kann die erfindungsgemäße Anordnung des Reinraumes 2 bei allen Filtervorrichtungen vorgesehen werden, bei denen insbesondere eine vergleichbare Rückspülung von Filterelementen 4 sinnvoll und möglich ist.

Beispielsweise werden häufig Spaltfilterkerzen 4 verwendet, bei denen ein Stapel runder Scheiben, die insbesondere poröses bzw. faseriges Material wie Papier oder dergleichen umfassen, auf einer Achse befestigt bzw. eingespannt ist. Ausstanzungen in den Scheiben bilden eine durchgehende Sammelleitung im Inneren des Stapels.

Darüber hinaus sind auch Spaltfilterkerzen 4 gebräuchlich, bei denen ein Draht spiralförmig um einen Haltestab aufgewickelt wird, so dass zwischen den einzelnen Wicklungen ein Spalt von genau definierter Größe zur Filtrierung der Flüssigkeit gebildet wird.

Es hat sich gezeigt, dass insbesondere bei Verwendung von in axialer Richtung dehnbaren Filterkerzen 4 eine verbesserte Reinigung der Filterkerzen 4 realisiert werden kann. Jedoch sind auch starre Filterkerzen 4 im Einsatz.

### Bezugszeichenliste:

- 1: Schmutzraum
- 2: Reinraum
- 3: Lochplatte
- 4: Filterkerze
- 5: Stutzen
- 6: Filtergehäuse
- 7: Zufuhrleitung
- 8: Abströmleitung
- 9: Druckluftleitung
- 10: Ventil
- 11: Anschlussleitung
- 12: Flansch
- 13: Dichtring
- 14: Fixierelement

## Patentansprüche

1. Vorrichtung zur Filtrierung von Verunreinigungen enthaltenden Flüssigkeiten mit mehreren, in einem Filtergehäuse (6) angeordneten Filterelementen (4), insbesondere hohlzylinderförmigen Spaltfilterkerzen (4), einem ersten Raum (1) mit zu filtrierender Flüssigkeit sowie einem zweiten Raum (2) mit filtrierter Flüssigkeit, wobei zur Rückspülung der Filterelemente (4) ein Gas im zweiten Raum (2) mit Druck beaufschlagbar ist, **dadurch gekennzeichnet, dass** der zweite Raum (2) im Wesentlichen innerhalb des ersten Raumes (1) angeordnet ist.

2. Vorrichtung nach Anspruch 1, **dadurch gekennzeichnet, dass** eine druckfeste Anschlussleitung (11) des zweiten Raumes (2) die Wandung des ersten Raumes (1) durchsetzt.

3. Vorrichtung nach einem der vorgenannten Ansprüche, **dadurch gekennzeichnet, dass** der zweite Raum (2) scheibenförmig ausgebildet ist.
